# EUROPEAN PATENT SPECIFICATION

(11) **EP 0 379 178 B1**
(45) Date of publication and mention of the grant of the patent: **24.03.1999**
(21) Application number: 90100934.0
(22) Date of filing: 17.01.1990
(51) Int. Cl.: G06F 1/32

(54) **Computer memory controller power saving management**
Energieersparnisverwaltung einer Computer-Speichersteuerungseinheit
Gestion de l'économie d'énergie d'un contrôleur de mémoire d'ordinateur

(30) Priority: 17.01.1989 US 298559
(43) Date of publication of application: 25.07.1990
(73) Proprietor: SANYO ELECTRIC CO., LTD., Moriguchi-shi, Osaka (JP)
(72) Inventor: Wong, William, California 94539 (US); Sritanyaratana, Siripong, Union City, California 94587 (US); Matsui, Mitsuru, Osato-gun, Saitama-ken (JP)
(74) Representative: Glawe, Delfs, Moll & Partner

(56) References cited:
- EP-A- 0 171 088
- EP-A- 0 230 960
- WO-A-88/06761
- US-A- 4 381 552
- PATENT ABSTRACTS OF JAPAN vol. 13, no. 50 (P-823) 06 February 1989 & JP-A-63 241 789 (AGENCY OF IND. SCIENCE & TECHNOL.) 07 October 1988

## Description

### Background of the Invention

This invention is related generally to electronic computer systems and, more specifically, to power management techniques that are most specifically applicable to portable personal computers.

Portable personal computers have become very powerful and sophisticated, and, in order to accomplish this, electronic circuits have become rather complex. A large number of integrated circuits are required in order to provide the desired functionality in a portable personal computer, thus increasing the power requirements to operate the computer. Since such a computer is powered from batteries, the increasing power requirements mean either that batteries having increased energy storage capability are required, or the computer can be operated only for shorter periods of time between battery replacement or recharging. During the past several years, integrated circuits have been made for such applications by CMOS techniques which reduces the standby power requirements of integrated circuits. However, the power required is still significant and it is desired that it be further reduced.

There is a trend in all types of personal computers, including portable, battery operated ones, toward a larger memory capacity. In addition to the system random access memory having a capacity equal to the maximum which can be accessed by a given size system address bus, many computer systems are providing an additional, expanded memory. As an example, a standard 20-bit address word size can address 640 kilo-bytes of data. Additional, expanded memory is also addressed with the same 20-bit address word size but with the additional aid of a memory controller that includes a stored memory map that translates a logical address presented on a system address bus into a physical address that is communicated to the memory on a memory address bus. It is usual to use a static random access memory as part of the controller to store the memory map. A static random access memory is chosen over a dynamic type because of its significantly higher speed of access. It is desired, of course, that the addition of such a memory controller not slow down access of the computer microprocessor to its system or expanded random access memory. However, a static random access memory does consume more power, a disadvantage in battery operated and portable computer applications.

US-A-4,381,552 discloses a power saving circuitry for portable electronic devices, wherein a microprocessor and associated memories are controlled as to power consumption by the microprocessor and associated logic circuits. If no activity occurs during a predetermined time period after an activity period, the microprocessor and its memory elements are put in a standby mode by powering down or reducing power to those elements not required to be in continuous operation.

On the other hand, WO-A-88/06761 discloses a computer system containing an address modification system including a mapping RAM for providing translated addresses in an extended address space.

Furthermore, EP-A-0 230 960 discloses a microcomputer with a ROM instruction memory having a highspeed sense amplifier which can be operated in either of a high-speed mode, requiring a high level of power, or a low-speed mode, when low power consumption is required.

Furthermore, EP-A-0 171 088 discloses a microprocessor including a second instruction decoder for, responsive to the chip of instruction received, supplying a standby control signal to part of the microprocessor.

### Summary of the Invention

Therefore, it is a general object of the present invention to provide a controller of a memory for computer system having a reduced power consumption.

According to the present invention this object is achieved by a controller according to claim 1 or a computer system according to claim 7 including a corresponding controller. The dependent claims are related to different advantageous aspects of the present invention.

Additional objects, advantages and features of the present invention will become apparent from the following description of a preferred embodiment thereof, which description should be taken in conjunction with the accompanying drawings.

### Brief Description of the Drawings

Figure 1 is a circuit block diagram that illustrates a computer system in which the present invention is incorporated; and
Figure 2 is a more detailed circuit block diagram of a portion of the computer system of Figure 1.

### Description of a Preferred Embodiment

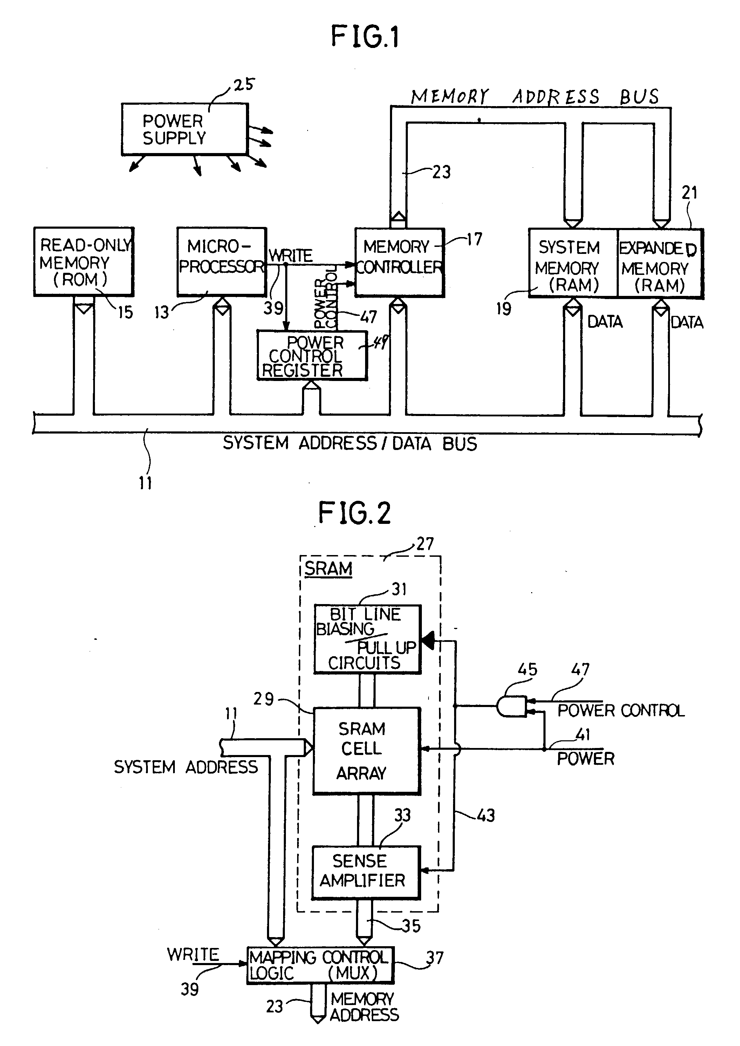

Referring to Figure 1, the components of a standard computer system are described. A common system address/data bus 11 connects a microprocessor 13, a read only memory (ROM) 15, a memory controller 17, a system memory 19 and an expanded memory. 21. The system memory 19 and expanded memory 21 are addressed over a memory address bus 23 from the memory controller 17. Data is read from or written into the system memory 19 and expanded memory 21 by its connection with the system bus 11. All components of the computer system of Figure 1 are, of course, supplied with appropriate voltages from a power supply 25 of sufficient current capacity to energize all of the system circuits.

In a typical system, the microprocessor 13 operates with a 20-bit wide bus 11. The bus is alternately used to communicate addresses and data between the computer components in a time multiplexing scheme. The system memory 19 is a random access memory (RAM) having a storage capacity of 640 kilo-bytes of data, the typical capacity that is addressable with a 20-bit address word. The expanded memory 21 is an extension of the RAM 19 and is usually formed physically as part of the same memory. A typical capacity of the expanded memory RAM 21 is an additional 360 kilo-bytes, making the total computer memory about one mega-byte in storage capacity. In order to address more data bytes than the width of the address word allows, the memory controller 17 selects which of the RAM 19 or RAM 21 of the computer memory is to be accessed for a given address. This is preferably accomplished in accordance with an industry Expanded Memory Specification (EMS). Of course, the improvements of the present invention are applicable to computer systems not using that standard and to those having different configurations, bus widths and system memory capacity.

Referring to Figure 2, which shows a portion of the memory controller 17 of Figure 1, a principal component is a static random access memory (SRAM) 27. SRAMs are well known, three principal components being separately shown in Figure 2. A primary component is an array 29 of static memory cells functionally arranged in a two-dimensional matrix with a pair of bit lines connecting with each of the cells in a column and word lines operably connected with each of the cells in a row. A given cell is addressed by proper voltages being applied to the pair of bit lines of the column in which the cell resides and a proper control signal on the word line for the row in which the cell is positioned. The bit lines of the cell array 29 are maintained at proper voltages by a biasing and pull-up circuit 31. An addressed cell in the array 29 is read through a sense amplifier 33.

After the state of a number of cells in the array 29 has been read which is equal to the length of the word being accessed from the SRAM 27, that word is outputted on a bus 35. The bus 35 is one of two inputs to a multiplexing circuit 37 which serves as mapping control logic. A second input is the system bus 11. The logic circuit 37 connects either the contents of the system bus 11 or the SRAM output 35 to the memory address bus 23 in response to an instruction from the microprocessor 13. Such an instruction addresses a register that is part of the logic circuits 37 and writes into that register a bit or word that indicates whether an upcoming access to the computer main memory is to be addressed from the system bus 11 or from the table stored in the SRAM 27. The circuit 37 then responds by connecting either the bus 11 or SRAM output 35 to the memory address bus 23 during such a main memory access. The appropriate of the system memory 19 or expanded memory 21 to be accessed is then also enabled by control signals (not shown).

It has been found that the SRAM 27 in such a system is used infrequently enough that significant power savings can be had by "turning off" power to some portions of the SRAM 27. Of course, a computer system will have idle times when power is applied to the system but yet an operator is not instructing the system to perform any calculations. Even when the computer system is actively operating, the SRAM 27 is used primarily when the expanded memory RAM 21 is being accessed by the system. The system memory RAM 19 is most commonly addressed directly from the system bus 11 through the multiplexer 37. As a result of expanded memory access being relatively infrequently, the SRAM 27 is infrequently utilized.

The cell array 29 of the SRAM 27 needs to have power continuously applied, this being done through a power circuit 41. Each of the bit storage cells within the array 29 of a usual SRAM is in the nature of a transistor flip-flop circuit which needs continuous power in order to stay in its programmed state. However, the sense amplifier 33 is used only during a reading operating of bits stored in the cell array 29. Accordingly, power is applied through a circuit 43 to the sense amplifier 33 primarily only during such reading operations. The power is preferably controlled by connecting the continuous power circuit 41 to the intermittent power circuit 43 through an AND-gate 45. The second input to the AND-gate 45 is a power control signal line 47. Thus, when the power control line 47 is active, power will be connected to the sense amplifier 43 through the AND-gate 45.

Others have recognized the high power consumption of the sense amplifier within an SRAM and have provided a different means for turning off power to it when an SRAM in different types of circuits is not being utilized. It has not heretofore been realized that a significant enough power saving could be had in a memory controller SRAM to make it worthwhile to do so.

Although the bit line biasing and pull-up circuits 31 of the SRAM 27 do not take so much power as the sense amplifier 33, they can also be isolated and have their power connected through the same controlled power circuit 43. It is optional to so control the power to the circuits 31 but it is preferable to do so in conjunction with controlling the power to the sense amplifier 33. The circuits 31 are necessary only at times when the cell array 29 is being accessed for reading or writing operations.

There are many ways that the power control signal in the line 47 can be generated, but a preferred way is to do so with use of microprocessor instructions. Such a technique as has been used by others to control power to other portions of a computer system is used in this novel application. A power control register 49 is connected to the system bus 11 and assigned a memory address. When the microprocessor 13 is instructed to address the register 49, a power control word placed on the system bus 11 as data can then be written into the register 49 in response to a write control signal in the line 39. The power control signal 47 is developed from one of those bits, causing power to be connected to the circuit 43 when in one state and turned off when in another state. The power control register 49 can be physically arranged on the same integrated circuit chip as the memor controller 17.

Although the present invention has been described with respect to a preferred embodiment thereof, it will be understood that the invention is entitled to protection within the full scope of the appended claims.

## Claims

1. A controller of a memory for a computer system having a microprocessor (13), a random access memory (19, 21), including a system memory (19) and an expanded memory (21), and a system bus (11) to which said microprocessor (13) and said memory (19, 21) are connected, comprising:
means (17) adapted to receive a memory address from said system bus (11) for translating, in accordance with a stored table, the memory address into a physical memory address to be applied to said memory (19, 21),
the controller being characterized in that said translating means (17) includes
a static random access memory (27) as a memory mapping controller; and
means (45) responsive to a power control signal (47) developed from microprocessor instructions for turning off power to such circuit portions of said static random access memory which are unnecessary to maintaining the stored table at times when said translating means is not being utilized.

2. A controller for a memory according to claim 1, wherein said static random access memory (27) includes:
storage cell array means (29) for containing a table that provides a data output of the physical memory address in response to a memory address, from the system bus,
means for continuously providing power to the storage cell array of said static random access memory while said computer system is operating.

3. Controller according to claim 1 or 2, wherein said power turn off means (45) includes means for turning off power to a sense amplifier (33) of said static random access memory at times when said translation means is not being utilized.

4. Controller according to claim 1 or 2, wherein said power turn off means (45) includes means for turning off power to both a bit line biasing and pull-up circuit (31) and a sense amplifier (33) of said static random access memory.

5. Controller according to any of the preceeding claims, wherein said power turn off means (54, 57) includes means (49) responsive to software instructions provided from said microprocessor for developing said power control signal.

6. Controller according to claim 5, wherein said power control signal developing means includes a register (49) connectable to said system bus for storing the state of said power control signal.

7. Computer system comprising a controller of a memory according to any of the preceeding claims 1 to 6.

## Patentansprüche

1. Steuerungsvorrichtung für den Speicher eines Computersystems mit einem Mikroprozessor (13), einem Speicher mit wahlfreiem Zugriff (19, 21) mit einem Systemspeicher (19) und einem erweiterten Speicher (21), und einem Systembus (11), mit welchem der Mikroprozessor (13) und der Speicher (19, 21) verbunden sind, mit:
einer Vorrichtung (17), die eine Speicheradresse vom Systembus (11) empfangen kann, um in Übereinstimmung mit einer gespeicherten Tabelle die Speicheradresse in eine physikalische Speicheradresse zu übersetzen, welche dem Speicher (19, 21) zugeführt werden soll, wobei die Steuervorrichtung dadurch gekennzeichnet ist, daß
die Übersetzungsvorrichtung (17) aufweist:
einen statischen Speicher (27) mit wahlfreiem Zugriff als Speichermapping-Steuerung; und
eine Vorrichtung (45), die in Abhängigkeit von einem Versorgungssteuersignal (47), welches von Mikroprozessorinstruktionen entwickelt wird, die Versorgung ausschaltet für solche Schaltkreisteile des statischen Speichers mit wahlfreiem Zugriff, welche unnötig sind für das Beibehalten der gespeicherten Tabelle, zu Zeitpunkten, wenn die Übersetzungsvorrichtung nicht benutzt wird.

2. Steuerungsvorrichtung nach Anspruch 1,
wobei der statische Speicher mit wahlfreiem Zugriff (27) aufweist:
eine Speicherzellenarrayvorrichtung (29) zum Enthalten einer Tabelle, die einen Datenausgang der physikalischen Speicheradresse enthält in Abhängigkeit von einer Speicheradresse von dem Systembus;
eine Vorrichtung zum kontinuierlichen Vorsehen einer Versorgung zum Speicherzellenarray des statischen Speichers mit wahlfreiem Zugriff, während das Computersystem im Betrieb ist.

3. Steuerungsvorrichtung nach Anspruch 1 oder 2,
wobei die Versorgungsausschaltvorrichtung (45) eine Vorrichtung aufweist zum Ausschalten der Versorgung zu einem Leseverstärker (33) des statischen Speichers mit wahlfreiem Zugriff zu Zeitpunkten, wenn die Übersetzungsvorrichtung nicht benutzt wird.

4. Steuerungsvorrichtung nach Anspruch 1 oder 2,
wobei die Spannungsausschaltvorrichtung (45) eine Vorrichtung aufweist zum Ausschalten der Versorgung sowohl eines Bitleitungsvorspannungs- und Pull-up-Schaltkreises (31) als auch eines Leseverstärkers (33) des statischen Speichers mit wahlfreiem Zugriff.

5. Steuerungsvorrichtung nach einem der vorangehenden Ansprüche,
wobei die Versorgungsausschaltvorrichtung (54, 57) eine Vorrichtung (49) aufweist, die in Abhängigkeit von Softwareinstruktionen vom Mikroprozessor das Versorgungssteuersignal entwickelt.

6. Steuerungsvorrichtung nach Anspruch 5,
wobei die Vorrichtung zum Entwickeln des Versorgungssteuersignals ein Register (49) enthält, welches mit dem Systembus verbunden werden kann, um den Zustand des Versorgungssteuersignals zu speichern.

7. Computersystem mit einer Speichersteuervorrichtung entsprechend einem der vorangehenden Ansprüche 1 bis 6.

## Revendications

1. Contrôleur de mémoire destiné à un système d'ordinateur comportant un microprocesseur (13), une mémoire vive (19, 21), comprenant une mémoire de système (19) et une mémoire étendue (21), et un bus de système (11) auquel sont reliés ledit microprocesseur (13) et ladite mémoire (19, 21), comprenant :
un moyen (17) conçu pour recevoir une adresse en mémoire depuis ledit bus de système (11) afin de traduire, conformément à une table mémorisée, l'adresse en mémoire en une adresse en mémoire physique devant être appliquée à ladite mémoire (19, 21),
le contrôleur étant caractérisé en ce que ledit moyen de traduction (17) comprend
une mémoire vive statique (27) en tant que contrôleur de mappage en mémoire, et
un moyen (45) répondant à un signal de commande d'alimentation (47) élaboré à partir d'instructions du microprocesseur afin de couper l'alimentation vers les parties de circuit de ladite mémoire vive statique qui ne sont pas indispensables pour conserver la table mémorisée aux moments où ledit moyen de traduction n'est pas utilisé.

2. Contrôleur destiné à une mémoire selon la revendication 1, dans lequel ladite mémoire vive statique (27) comprend :
un moyen de réseau de cellules de mémorisation (29) destiné à contenir une table qui fournit une sortie de données de l'adresse en mémoire physique en réponse à une adresse en mémoire provenant du bus de système,
un moyen destiné à appliquer en permanence une alimentation au réseau de cellules de mémorisation de ladite mémoire vive statique pendant que ledit système d'ordinateur fonctionne.

3. Contrôleur selon la revendication 1 ou 2, dans lequel ledit moyen de coupure de l'alimentation (45) comprend un moyen destiné à couper l'alimentation vers un amplificateur de lecture (33) de ladite mémoire vive statique aux moments où ledit moyen de traduction n'est pas utilisé.

4. Contrôleur selon la revendication 1 ou 2, dans lequel ledit moyen de coupure de l'alimentation (45) comprend un moyen destiné à couper l'alimentation à la fois vers un circuit de polarisation et d'excursion haute de lignes de bits (31) et un amplificateur de lecture (33) de ladite mémoire vive statique.

5. Contrôleur selon l'une quelconque des revendications précédentes, dans lequel ledit moyen de coupure de l'alimentation (54, 57) comprend un moyen (49) répondant à des instructions du logiciel fournies à partir dudit microprocesseur afin d'élaborer ledit signal de commande d'alimentation.

6. Contrôleur selon la revendication 5, dans lequel ledit moyen d'élaboration de signal de commande d'alimentation comprend un registre (49) qui peut être relié audit bus de système afin de mémoriser l'état dudit signal de commande d'alimentation.

7. Système d'ordinateur comprenant un contrôleur de mémoire selon l'une quelconque des revendications précédentes 1 à 6.
